Europäisches Patentamt

European Patent Office

Office européen des brevets

(19)

(11) Publication number : **0 528 773 A1**

(12) # EUROPEAN PATENT APPLICATION

(21) Application number : **92830413.8**

(22) Date of filing : **27.07.92**

(51) Int. Cl.⁵ : $G06F\ 13/38$, $G06F\ 15/16$

(30) Priority : **09.08.91 IT FI910209**

(43) Date of publication of application :
**24.02.93 Bulletin 93/08**

(84) Designated Contracting States :
**DE ES FR GB**

(71) Applicant : **TOWER TECH S.R.L.**
**Via Sant' Andrea, 59**
**I-56127 Pisa (IT)**

(72) Inventor : **Lazzeri, Paolo**
**38, Via Brunelleschi, Frazione Arena Metato**
**I-56017 S.Giuliano Terme (Pisa) (IT)**
Inventor : **Maccari, Antonio**
**109, Via Bonanno Pisano**
**I-56100 Pisa (IT)**

(74) Representative : **Bardini, Marco Luigi et al**
**c/o Società Italiana Brevetti S.p.A. Corso dei**
**Tintori, 25**
**I-50122 Firenze (IT)**

(54) **A system for performing dynamically the configuration of expansion boards on personal computers having a standard bus.**

(57)    A base system (3) such as a personal computer, connected to at least another preexisting expansion board (3a), provided with a dynamic set-up expansion board (4) including a device (5) for configurating personal computer resources as a function of the expansion board (4) itself taking into account the - one or more - preexisting expansion boards (3a). The expansion board (4) comprises an operative logic (6) and program means operative at the power-on of the system, provided for analysing the system and recognizing the space for available resources, choosing in this space the configuration to be assigned to the board (4). The latter is provided with means suitable for memorizing the configuration arranged by said program means and for maintaining it during all the working time and can be assigned to any purpose within the suitable resources of the system.

Fig. 1

EP 0 528 773 A1

The system according to the present invention allows to establish dynamically the space of memory addresses and the resources used on the BUS by an expansion board for Personal Computer. In the considered particular but not limitative case, the bus is the one belonging to the architecture of "IBM AT compatible" systems; reference is made to the publication "IBM AT Technical Reference Manual" for the description of the architecture of AT BUS and of other system components: DMA controller, Interrupt controller, etc.

The resources that an expansion board can request on AT BUS are memory addresses, input/output ports, DMA channels, interrupt lines. The problem to be solved designing expansion boards for AT systems, is that of finding in the space of resources available on AT architecture, for expansion boards, the configuration satisfying the needs of the expansion board without being in conflict with other possible expansions, which coexist in the same system. During AT systems history various resources assignments have been established to expansions, which are more commonly used by users of these systems. This "historical" assignments cover the majority of the space of the resources offered by AT architecture for expansions. In the nowadays available solutions, while designing a new expansion, it is necessary to foresee that a new board be configurable, in relation with the use of a different set up of resources memorized in the hardware board. These configurations can be selected by jumpers, that must be manually set by the user during set-up. The expansion board installing operator is required to know the occupation map of the system resources and to choose the jumpers set-up, which establishes the resource allocation for the new expansion board, without being in conflict with the remainder of the system. In addition, the research for available configuration spaces must be repeated every time the system layout is changed.

Various techniques allowing to identify the available resources space exist in the AT IBM system architecture, but no method is known for dynamically defining the resources to be assigned to the expansion board.

According to the present invention, when the system starts, the running of a resource assignment program is contemplated, which analyzes the system and recognizes the available resource space, chooses in this space the configuration to be assigned to the associated board and sends to the board the assigned configuration. The expansion board is provided with a device suitable for memorizing that configuration and for using it during the whole operative time (until the power-off). The communication between system and resource configuration device occurs by means of data/addresses and control standard BUSses. The use of an I/O register is contemplated, among the ones provided by the AT IBM compatible systems, the contents of which does not modify the status of the system. The registers of this type are called "scratch" registers and are tipically used for data temporary saving. The configuration software, run by the CPU of the system for sending the assigned configuration to the board, performs I/O Write operations on a "scratch" register, following a determined protocol. The resource configurating device, present on the expansion board, listens to I/O Write operation on the "scratch" register, recognizes the protocol, memorizes the assigned configuration and controls the resource assignment signals, toward the expansion board logic. After having been allocated, resources will be used by the system by means of data/addresses and control standard BUSses.

System advantages according to the invention can be resumed as follows:

1) the board is born without hardware mapping

2) the board is capable of adapting itself to the specific system configuration, in which it will be installed.

3) the board realization step is completely indipendent from the study of the possible system configurations; the limitation of the AT IBM systems architecture are the only constraints.

4) the board resource assignment step must only regard the system current configuration, in which the board must operate, because the resource allocation occurs when the system is on, and not during the expansion design.

5) changes in system layout are automatically transferred into board configuration without requiring any operator's intervention.

The present invention will be now described referring to a now preferred embodiment, referred to as an illustrative and not limitative example and based on the figures of the attached drawings, where:

Figure 1 shows a general block diagram of the system according to the present invention;

Figure 2 shows a detailed block diagram of one of the blocks shown in figure 1 (State Machine);

Figure 3 shows a state diagram of the operation of the circuit unit shown in figure 2; and

Figure 4 shows the program means flow chart for the implementation of the system operative step according to the present invention.

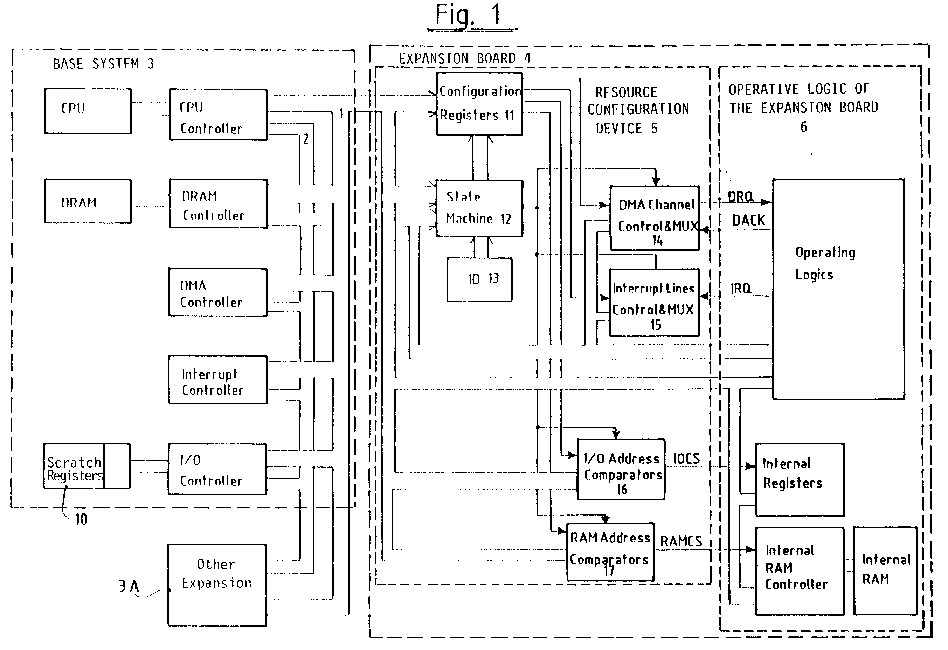

A general diagram of the AT compatible systems architecture is taken in consideration, as shown in figure 1. The base system 3 basically comprises: CPU, Memory, Registers, DMA (Direct Memory Access) Controller, and Interrupt Controller, together with the BUS for data and addresses exchange (1) and the Control signals BUS (2). Any expansions, generically indicated in 3A, together with the general expansion board 4 according to the invention, communicates with the base system by means of BUSses 1 and 2. The expansions 3A and/or 4 can be provided with memories and/or registers, which are accessible to base system CPU and can request from base system the use of a quick access channel to memory (DMA channel) and/or the use of an interrupt line. All the accesses to these resources occur by means of the BUSses 1 and 2. Using the space of memory addresses, the space of I/O addresses, the DMA channel and the Interrupt line without generating conflicts with the remainder of the system where they are installed, is a task of every expansion.

The object of the invention, the expansion board 4, whose specific function is not relevant within the context of the present invention is provided with a device of resource configuration, shown in its whole in 5, suitable for recognizing the assigned resources configuration, memorizing it and controlling the resource assignment signals toward the logic 6 of the expansion board. Every resource configuration device 5 is provided with an identifier 13, suitable for discriminating various expansion boards, provided with the device of the invention, which can coexist in the same computer.

As an example, assuming of giving a number to computer expansion connectors, the identifier can be the slot connector number, in which the board is located. In this case, assuming that the computer is provided with 8 expansion connectors, the identifier 13 will generate a number from O to 7, thus representable with 3 binary digits, codified, for example, in a binary code by 3 movable jumpers, or by other means known in the field. In the AT compatible systems some Input/Output ports are established, whose content doesn't modify the state of the system, but are used for data temporary hold. An example of these ports is the address 3FFh of the serial interface. In the following, these ports are called "scratch" registers and referring to Fig.1, are represented by block 1. Without having any consequence on the hardware it is possible to run a program that, addressing one of these registers, saves the register content in a temporary area, performs a certain number of writing operations and restores the register content with the original data saved in the temporary area. The writing operations send data according to a defined protocol, that can be recognized by resource configuration device 5. Each sequence begins with a head character, followed by the end user address, the description of sent data type, and eventually data. The program performing this operations sequence, will simply called "Protocol" in the following. The Protocol must take the complete control of the system, that is, must not be interrupted during operation. The data type can be memory address, I/O address, DMA channel, Interrupt line.

When the expansion board 4 is installed in the computer, as it will be explained further, an installing program must be run, requesting from the operator the identifier 13 of the board 4, and memorizing this datum in the Protocol program. During this step, the expansion board 4 is not visible on BUSses 1 and 2.

The configuration step is performed every time the system is switched on, at the first access request from the board and it is part of the board management program.

In order to simplify the flow chart description, the Protocol function (Code_Command, Parameter) is defined.

The Protocol function is defined as follows:

I/O Write to the address Ox3FF of the ESC Code
I/O Write to the address Ox3FF of the Code_Command
I/O Write to the address Ox3FF of the Parameter
I/O Read Write to the address Ox3FF.

At the first access request to the expansion board 4, the activation program is run, which analyzes the system in order to search in the system the available source space and to establish, based on the needs of the expansion board logic 6, which memory and I/O addresses, which DMA channel and which interrupt line to assign. After identifying the set of these resources, the Protocol is run, sending the configuration data. The possibility of performing the resource assignment by means of a configuration directly provided by the user is also contemplated. The state machine 12, located on the resource configuration device 5, is provided for recognizing the Protocol, for recognizing its own address, for reading the data sent by the Protocol. The machine 12, having recognized the head character, followed by its identifier 13 address, reads the following information, which establishes the following data type. Based on the type of datum, the machine 12 selects the configuration register of the block 11, and memorizes the following datum in that register. In the block 11 of the configuration registers the registers RDMA, RIRQ, RIOMEM, RIOADD, RIOMASK are contained.

The RDMA register contains the number of the DMA channel assigned to the expansion board 4; being six DMA channels available on the AT systems BUS, this is a 3 bits register. The NULL channel is contemplated, in case the expansion board logic 6 does not require the DMA use. The RIRQ register contains the number of the interrupt line assigned to the expansion board 4; being eleven interrupt lines available on the AT system BUS, this is a 4 bits register. A NULL line is contemplated, in case the expansion board logic 6 does not require the interrupt use. The RMEM register contains the memory address assigned to the expansion board 4, it is a 8 bits register. The 7 least significant bits contain the A17..A23 address configuration for the 128KByte space assigned to the expansion board 4. Assigning a 128 KByte space, necessary in the AT systems architecture, is contemplated in order to use the zero-wait-state memory access mechanism. The 8th bit is provided for identifying the NULL address, in case the expansion board 4 logic 6 does not require the memory address use.

If the expansion must be provided with more than 128 KBytes of memory, a memory address Mask register, similar to the I/O addresses RIOMASK register, must be contemplated.

The RIOADD address contains the I/O address assigned to the expansion 4; being 16 I/O address bits available on the AT system BUS, this is a pair of 8 bits register.

The RIOMASK register contains the mask of I/O addresses assigned to the expansion board 4; it is a 5 bits register. The AT systems expansion boards can possibly require a series of I/O contiguous addresses, (called range) whose 4 least significant bits (e.g. the serial interface uses the addresses 03FOh...03FFh) are different. The 0...3 bits establish the possible address range assigned to the expansion, that is which of the least significant bits must be taken into account in the decoding. In this case RIOADD contains the base address. The bit 4 of RIOMASK is contemplated for identifying the NULL address, in case the expansion board logic 6 does not require the I/O address use.

If the expansion 4 requires more than 16 contiguous I/O addresses, the RIOADD and RIOMASK registers can be used for establishing a set of readdressing registers, which must be contemplated in the expansion board logic 6.

The state machine 12 can have a state where it is locked, called "Lock" state, from whom the state machine 12 can exit only after the unlocking operation has been ended. The state machine 12 is tipically in the "Lock" state at the end of the system Reset and exits from it with a special procedure, common to all devices of type 5. This procedure avoids the state of the machine 12 to be altered by possible spurious writings on Protocol addresses, before the configuration has been assigned to the expansion board. After device 5 having recognized the Protocol and the configuration having been assigned, the state machine 12 is disabled and comparators 16 and 17 and multiplexers 14 and 15 are enabled. The comparators 16 and 17 compare the addresses present on BUS 1 with the addresses coming from block 11, and when the address is recognized generate the register Chip Select (IOCS) or the memory Chip Select (RAMCS), located in the expansion board logic 6.

The multiplexers 14 and 15 deviate DMA (DRQ and DACK) and interrupt (IRQ) control signals on the suitable line of BUS 2, based on configuration information coming from block 11.

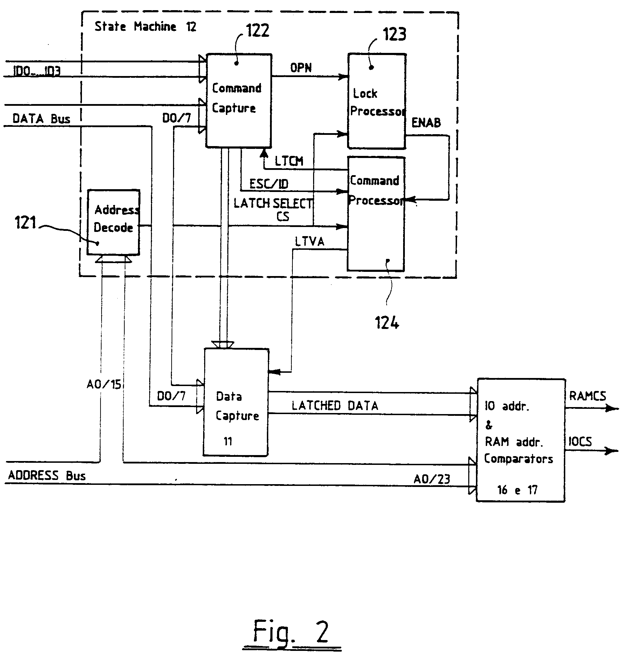

As an illustrative but not limitative example a system application according to the invention will be now described, assigning memory and I/O addresses to an expansion board, disclosing into detail the state machine 12, referring to figure 2.

The state machine 12 comprises the hardware for managing the automatic set up protocol of the Memory and I/O mapping address for an expansion board such as the 4 one, on an AT BUS. The memory space is assigned in blocks of 128K; by programming internal comparator registers is possible to establish the address where the board will be mapped. Each state machine 12 is able to support one only memory assignment.

The I/O space allows to allocate up to sixteen sequential addresses and it is possible to enable or not the comparison of the four least significant address lines. After programming the state machine 12 works as an address decoder generating the memory chip select (RAMCS) based on A17...A23 and the I/O one based on A14...A4 in addition to the address lines enabled on A3...A0. The state machine 12 comprises four functional blocks which perform 2 the address Recognition for the initial programming (Address decode 121), command Recognition and Memorization (Command Capture 122), protocol activation (Lock Processor 123) and command Execution (Command Processor 124) respectively. Two functional blocks for mapping Memorization (Data Capture 11) and address Comparison (Comparators 16, 17) are associated with the state machine 12. The state machine 12 has three possible configurations (Lock, Program, Active), the passage from one to the other occurs through specific I/O sequences recognized by the state machine.

After the reset signal activation not shown, the state machine 12 replies to the Ox3FF address, mapped on the scratch register of the serial port COMI and is in the operative configuration Lock. The state machine 12 replies for writing operations only; therefore the data written to the selection address are memorized both inside the chip and in the scracth register of the COM1 port, while an I/O read operation to Ox3FF takes the values stored in the scratch register without making the component active. In order to avoid mismatching in the control signal management, the state machine 12 does not drive any of the bus lines, therefore the access speed will be controlled by the host system timing logic only. For example, in a system provided with a COM1 port, the strobe duration and the cycle period will be defined based on the resident serial interface requirements; if the COM1 port is not located on the host system bus, the same parameters will be the ones of the 8 MHz AT bus for an 8 bits I/O access. After the reset, the state machine 12 is in the Lock state, that is, it is waiting for the activation sequence recognition, in order to start the mapping definition protocol. The Lock state started from the reset and ends adter the finishing of the Lock exit procedure; after this procedure has been finished restoring the Lock condition is not possible anymore, if not through the reset generation. The Lock exit procedure is not conditioned by the identifier recognition, therefore, in case several units corresponding to the state machine 12 on the bus coexist, they will be switched on at the same time.

The Lock exit procedure comprises seven sequential writings of the value OxE4 to the I/O address Ox3FF, followed by readings to the address Ox3FF. This sequence must not be interrupted, therefore no other I/O activities must be located on the bus after the first writing except the procedure ones (DMA and Refresh operations are allowed). An I/O spurious operation during Lock exist procedure running resets to zero the counting of necessary writings.

Referring to the block diagram of the state machine 12, the I/O writing of the code OxE4 to the address Ox3FF switches the OPN line (generated by Address Decode) on. This condition is recognized by the Lock Processor module, which recognizes the sequence and counts. After the counting, this last module generates the ENAB signal toward the Command Processor.

The ENAB signal activation by means of the Lock Processor enables the Command Processor to recognize the programming sequences, that is the Command Processor switches to the Program operative configuration. The programming sequences are conditioned by the identifier (ID13) recognition, so that the correct assignment is guaranteed even if there are various state machines 12 on the bus. The general command sequence format is the following:

Begin command: I/O write to the address Ox3FF of the code Ox1B (ESC).

Code command: I/O write to the address Ox3FF of the command byte.

Parameter: I/O read to the address Ox3FF of the parameter.

Closing: I/O read to the address Ox3FF.

The command code comprises the target device indentifier stored in the four least significant bits and is the qualifier of the requested operation stored in the four most significant bits.

| BITS | 7..4 | 3..0 |
|---|---|---|
| Memory address | 0000 | XXXX |
| I/O address (low) | 0001 | XXXX |
| I/O address (high) | 0010 | XXXX |
| I/O Mask | 0011 | XXXX |
| DMA Channel | 0100 | XXXX |
| Interrupt line | 0101 | XXXX |
| (Please note that "XXXX" = ID) | | |

The target device identifier is the identifier that has been written in the Protocol program, during the installation step. Parameter is the datum following the Command Code.

The Command Capture performs the task of recognizing all signalings involving a state change and comprises the register that makes the command static, that is the four bits 7..4 of the Code Command and based on them will generate Data Capture latch selection.

The Command Capture decodes the Data BUS and generate the ESC, ID, OPN signals, and decodes the Data BUS DO..D7 as well. OPN is the signal used by the Lock Processor for enabling the Command Processor. The Address Decode decodes the Address BUS for recognizing the scratch register address, and generates the CS signal toward the state machine 12 (Lock Processor 123 and Command Processor 124).

After ESC is arrived on an I/O Write operation on the scratch register and has been recognized as a valid ID, the Command Processor generates the LTCM signal, in order to make the Command Capture memorize the four bits 7..4 of the Command Code.

If after the command start code recognition an I/O writing with non corresponding identifier ID is signalled, the processor will be waiting for a new command start code. In case ID is valid, but command is not recognized, the processor follows the whole protocol, though no data will be memorized in the internal registers. The running of a recognized command sequence is memorized. When all the supported sequences have been run at least one time the Command Processor is disabled and can be enabled again only after reset.

If the ID is valid and the command is recognized, the Command Capture generates the Data Capture latch selection that must contain the following Parameter. Successively the Command Processor generates the LTVA signal, toward the Data Capture, for enabling the Parameter memorization.

In case the memory address is established, the parameter comprises the value of the lines A17..A23 lsb first, that is DO=A17, D1=A18...D6=A23. Bit D7 is used as enable, its value must be "1" for enabling the address comparator. The running of the memory address setting protocol with the parameter containing D7=0 signals

EP 0 528 773 A1

that the board is not mapped in the memory, thus the memory chip select signal (RAMCS) will be always inactive. The parameter bits DO..06 are memorized in a RMEM register present in Data Capture.

For a complete definition of the I/O space, 16 address lines (AO..A15) are used, where the four least significant ones can be masked so that their state is not taken into account by the comparator generating the I/O chip select. As far as the parameter established in the protocol comprises eight bits, the procedure finishing requires the running of three sequences: in the low I/O address definition the parameter comprises the value of the lines

> DMA_CHANNEL_ASSIGNED
> INTERRUPT_LINE_ASSIGNED

After that, there is the decision block 202, where the question is made whether the expansion board 4 must use or not use memory addresses. If the answer is yes, the program goes to block 203, where the Protocol performs the memory address assignment. If the answer is no on block 202, the program skips to decision block 204, where the question is made, whether the expansion board 4 uses or not I/O addresses. If the answer is yes, the program goes to block sequence 205, 206, 207 where the protocol performs the operations described in the blocks 205, 206, 207 for the I/O address assignment. If the answer is no in block 204, the program skips from block 204 to decision block 207, where the question is made, whether the expansion board 4 needs DMA access. If the answer is yes, the program goes to block 208, where the DMA channel is assigned. If the answer is no, the program skips to decision block 209, where the question is made, whether the board 4 uses interrupts. If the answer is yes, the block 210 assigns the INTERRUPT line. If the answer is no, the program skips to END block 211, which sets the end of the configuration step.

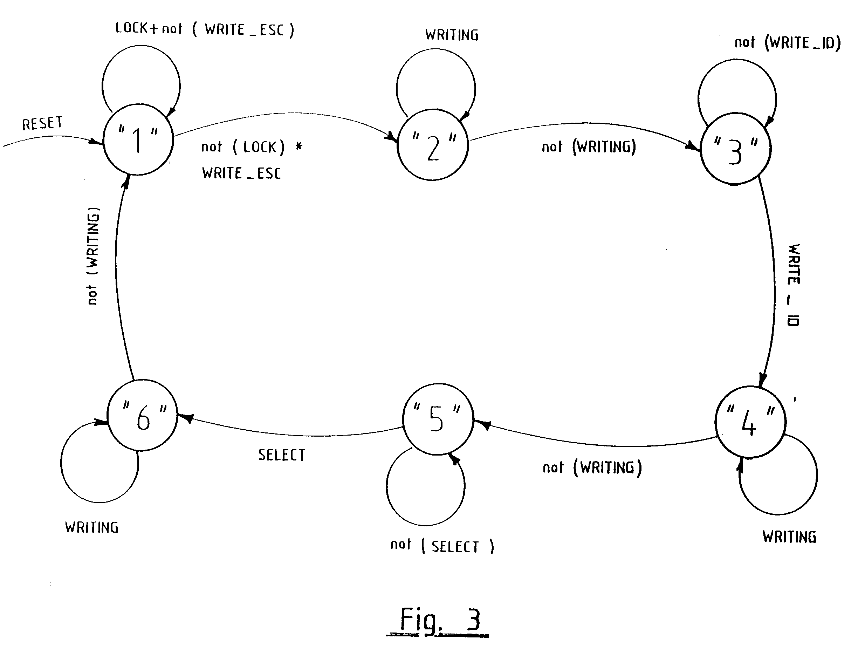

Figure 3 shows the state diagram of the Command Processor 124.

In order to simplify the illustration of the state diagram of figure 3, the following conditions are established:

> Write = IOW on
> Write ESC = IOW on *CS on *ESC on
> Write ID = IOW on *CS on *CS on * ID valid
> Write not_ID = IOW on *CS on * ID valid
> Select = IOW on *CS on

AO..A7 lsb first (DO=AO, D1=A1...D7=A7), while for the I/O high address it establishes the lines A8..A15 (DO=A8, D1=A9..D7=A15). The third sequence defines which, among the AO..A3 lines, must be part of the decoding in the generation of the I/O chip select (IOCS). In this case the parameter comprises the activation mask, a bit set to "1" means that the corresponding signal must be inserted in the decoding, a bit set to "O" means that the address line will be ignored. The correspondence assignment is the following: DO<>AO, D1<>A1, D2<>A2, D3<>A3; bit D4 must be set to 1 for enabling the I/O address comparator. IF D4=0 the I/O Chip Select (IOCS) will not be generated, whatever the AO..A15 address configuration is.

The three sequences are memorized in the RIOADD and RIOMASK registers, located in the Data Capture.

In the Active operative configuration, the internal processors of the state machine 12 have been disabled, and the comparators have been enabled. The state machine 12 operates as an address decoder and can exit this state after the reset line enabling only. It is important to note that the decoding function is not conditioned by the strobes (IOR, IOW, MEMR, MEMW) and that the I/O chip select is not generated when the DMA is active, while the master mode accesses are served.

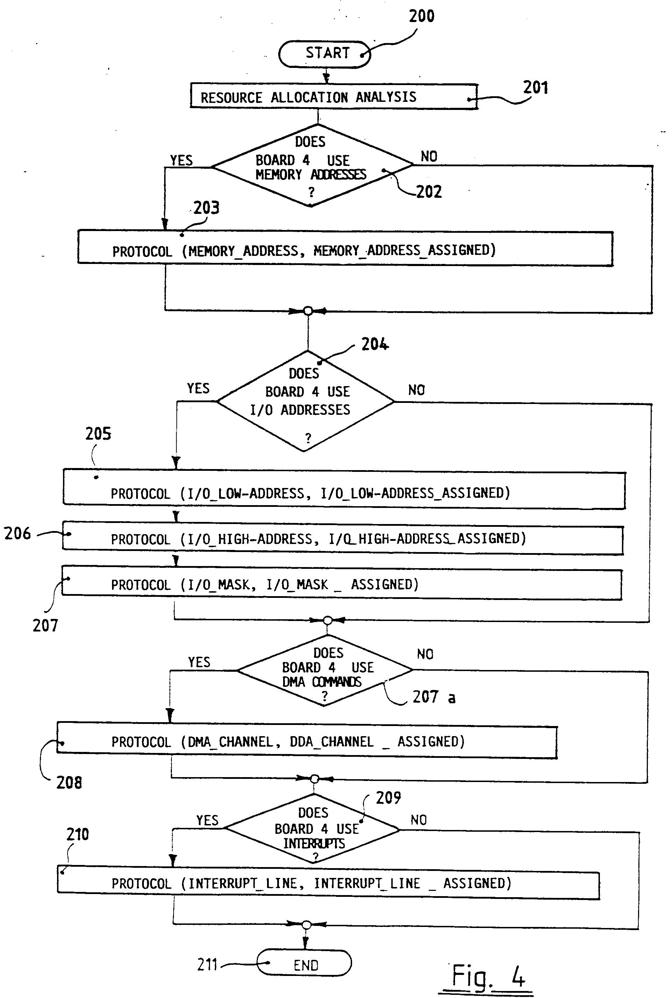

The configuration step flow chart is shown in figure 4.

After the block START 200, in the block 201 the analysis is performed of the resources available in the system when the expansion board 4 must be inserted. This procedure gives back the following output parameters:

> MEMORY_ADDRESS_ASSIGNED
> IO_LOW_ADDRESS_ASSIGNED
> IO_HIGH_ADDRESS_ASSIGNED
> Lock = ENAB off

The machine has 6 states and generates two control signals from the external logic: LTCM and LTVA.

The LTCM and LTVA values in the 6 states are shown in the following table:

| STATE | LTCM | LTVA |
|---|---|---|
| "1" | off | off |
| "2" | off | off |
| "3" | off | off |
| "4" | on | off |
| "5" | off | off |
| "6" | off | on |

## Claims

1. A system for establishing dinamically the configuration of expansion boards of personal computers having a standard bus comprising a base system (3) ssociatd with at least another preexisting expansion board (3A), characterized in that it comprises a dynamic configuration expansion board (4) comprising a configuration device (5) of the personal computer resources as a function of said expansion board (4), taking into account the one or more preexisting expansion boards (3A), said expansion board comprising an operative logic (6) typical of said dynamic configuration expansion board (4); program means operative for the system activation, provided for analyzing the system and recognizing the available sources space and for choosing in this space the configuration to be assigned to said board (4), said board being provided with means suitable for memorizing the configuration set by said program means and for maintaining it during all the operative time.

2. A system according to claim 1, characterized in that said program means are provided for cooperating with register means for storing the configuration (11), associated to a state machine (12) for managing the configuration operation.

3. A system according to claim 2, characterized in that said expansion board (4) is provided with an identification device (13) that can be set in advance, at the moment of the installation of said expansion board (4), for setting the identification of said (one or more) expansion boards (4).

4. A system according to claim 3, characterized in that said program means operate according to the flowchart shown in figure 4.

5. A system according to claim 4, characterized in that said state machine (12) is provided for operating according to the state diagram shown in figure 3.

6. A system according to claim 5, characterized in that said dynamic configuration is performed when the program is started, after the system reset.

Fig. 1

EXPANSION BOARD 4

OPERATIVE LOGIC OF THE EXPANSION BOARD 6

Operating Logics

DRQ
DACK
IRQ

Internal RAM

Internal Registers

Internal RAM Controller

RESOURCE CONFIGURATION DEVICE 5

DMA Channel Control&MUX 14

Interrupt Lines Control&MUX 15

IOCS

I/O Address Comparators 16

RAMCS

RAM Address Comparators 17

Configuration Registers 11

State Machine 12

ID 13

BASE SYSTEM 3

CPU

CPU Controller

DRAM

DRAM Controller

DMA Controller

Interrupt Controller

I/O Controller

Scratch Registers

Other Expansion

3 A

10

1

2

State Machine 12

ID0...ID3

DATA Bus

121 — Address Decode

122 — Command Capture

OPN

DO/7

LTCM

ESC/ID

LATCH SELECT
CS

LTVA

123 — Lock Processor

ENAB

Command Processor

124

A0/15

DO/7

Data Capture
11

LATCHED DATA

ADDRESS Bus

A0/23

IO addr.
&
RAM addr.
Comparators
16 e 17

RAMCS

IOCS

Fig. 2

LOCK + not ( WRITE_ESC )

WRITING

not (WRITE_ID)

RESET

"1"

not ( LOCK ) *
WRITE_ESC

"2"

not (WRITING)

"3"

not (WRITING)

WRITE_ID

"6"

SELECT

"5"

not (WRITING)

"4"

WRITING

not ( SELECT )

WRITING

Fig. 3

EP 0 528 773 A1

START — 200

RESOURCE ALLOCATION ANALYSIS — 201

DOES BOARD 4 USE MEMORY ADDRESSES ? — 202
YES / NO

203
PROTOCOL (MEMORY_ADDRESS, MEMORY_ADDRESS_ASSIGNED)

DOES BOARD 4 USE I/O ADDRESSES ? — 204
YES / NO

205
PROTOCOL (I/O_LOW-ADDRESS, I/O_LOW-ADDRESS_ASSIGNED)

206
PROTOCOL (I/O_HIGH-ADDRESS, I/O_HIGH-ADDRESS_ASSIGNED)

PROTOCOL (I/O_MASK, I/O_MASK _ ASSIGNED)
207

DOES BOARD 4 USE DMA COMMANDS ? — 207 a
YES / NO

PROTOCOL (DMA_CHANNEL, DDA_CHANNEL _ ASSIGNED)
208

DOES BOARD 4 USE INTERRUPTS ? — 209
YES / NO

210
PROTOCOL (INTERRUPT_LINE, INTERRUPT_LINE _ ASSIGNED)

211 — END

Fig. 4

EP 0 528 773 A1

## European Patent Office

# EUROPEAN SEARCH REPORT

Application Number

EP 92 83 0413

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 281 999 (INTERNATIONAL BUSINESS MACHINES CORPORATION) | 1-3 | G06F13/38 G06F15/16 |
| A | * column 1, line 14 - line 41 * <br> * column 2, line 4 - line 32 * <br> * column 3, line 22 - column 4, line 23 * <br> * column 5, line 18 - column 6, line 28 * <br> * abstract; figures 1-3 * | 4-6 | |
| X | EP-A-0 116 694 (INTERNATIONAL BUSINESS MACHINES CORPORATION) | 1-3 | |
| A | * page 1, paragraph 1 * <br> * page 3, paragraph 5 - page 4, paragraph 1 * <br> * page 5, line 32 - page 6, line 5 * | 4-6 | |
| A | EP-A-0 273 136 (HONEYWELL BULL INCORPORATION) <br> * page 2, line 11 - line 21 * <br> * page 2, line 53 - page 3, line 5 * <br> * abstract; figure 2 * | 1-6 | |

TECHNICAL FIELDS SEARCHED (Int. Cl.5)

G06F

The present search report has been drawn up for all claims

| Place of search | Date of completion of the search | Examiner |
|---|---|---|
| THE HAGUE | 25 NOVEMBER 1992 | NGUYEN Xuan Hiep |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

12